# EUROPEAN PATENT APPLICATION

(11) **EP 2 998 595 A1**
(43) Date of publication of application: **23.03.2016**
(21) Application number: 15185642.4
(22) Date of filing: 17.09.2015
(51) Int. Cl.: F16C 11/06

(54) **FAIL SAFE BALL JOINT**

(30) Priority: 18.09.2014 IN CH45402014
(71) Applicant: Rane (Madras) Limited, Chennai 600 042 (IN)
(72) Inventor: SUNDARARAJAN, S., 600 042 CHENNAI (IN); VIJAYANAND, A., 600 042 CHENNAI (IN); VASANTH, K., 607 301 CUDDALORE (IN); K. ALEXANDER, BEN GEORGE, 560 097 BANGALORE (IN)
(74) Representative: Dall'Olio, Christian

(57) **Abstract**

The present invention relates to a steering metallic ball joint mechanism which eliminates undesirable ball socket separation resulting in complete loss of vehicle control. Further, the present invention aims to improve the ball socket separation force in the steering ball joint mechanism subsequently improving vehicle safety. In one aspect, the steering ball joint mechanism is provided with an integral retainer seat (10,11) on a ball stud (3,4) to improve ball socket separation force, said ball stud and integral retainer seat forms a single entity. In another aspect, the steering ball joint mechanism is provided with retainer seat positioned in between ball pin and top of bearing cup. The simple construction and application of the retainer seat on a ball joint mechanism aides to retain defined steering linkage configuration even when undesirable excess wear has occurred which can be identified by the user before ball socket separation occurs.

## Description

### FIELD OF INVENTION

The present invention relates to an automotive steering ball joint mechanism. More specifically, the present invention relates to a steering metallic ball joint mechanism which eliminates undesirable ball socket separation resulting in complete loss of vehicle control. Further, the present invention aims to improve the ball socket separation force in the steering ball joint mechanism subsequently improving vehicle safety.

### DESCRIPTION OF PRIOR ART

In an automobile, ball joints are used on virtually every automobile and work similar to the ball and socket design of the human hip joint. The steering mechanism in automobiles is provided with the ball joint linkage assemblies in other words commonly referred to as Drag Link Assembly (DLA) and Tie Rod Assembly (TRA). The DLA links the steering gear drop arm on one side and vehicle wheel-knuckle arm assembly on the other side. The TRA links front wheel (left side and right side) stub axles. Such an arrangement provides high steering flexibility of road wheels based on the rotational motion given by vehicle driver through steering wheel. Primary requisite for any automobile steering system is to maintain its linkage configuration under defined boundary conditions and loads.

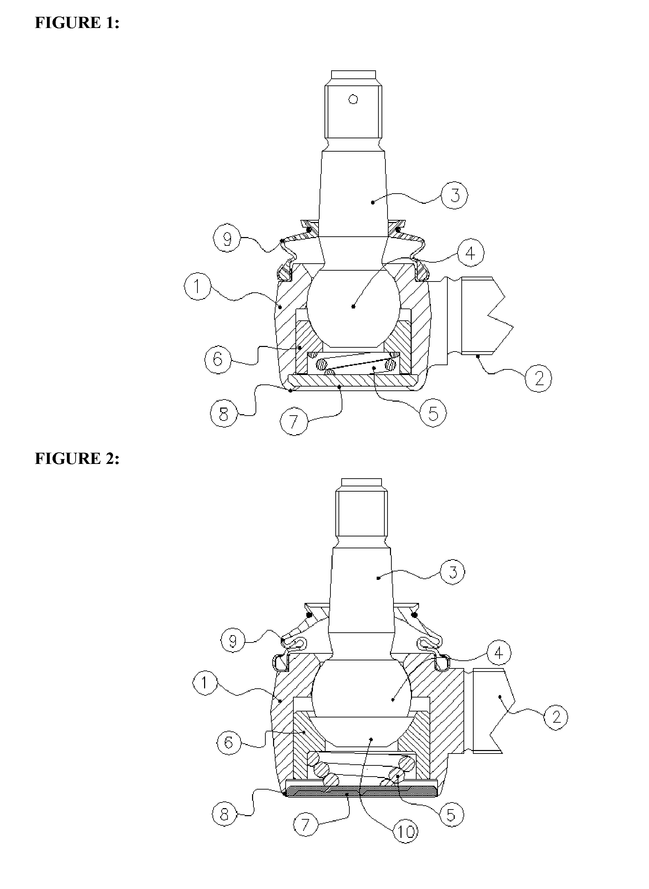

An ideal situation for such a steering system is to have the same performance and response throughout its intended service life. However, in reality there is a gradual degradation of performance and response until point of overhaul. This undesirable consequence is primarily because of component wear contributed by elements of tribology, environmental conditions, service usage and quality of maintenance. Referring to Figure 1, conventional steering linkage ball joint comprises of a socket housing (1) with a stem (2) for engagement with steering linkage (not shown), a ball pin (3) with a spherical head (4) encapsulated in top metallic bearing cup (6) and the socket housing (1) and an elastic device (5) is placed between the top metallic bearing cup (6) and end plate (7) with or without grease nipple provision. The elastic device (5) can alternatively be replaced by a polyurethane spacer. All internal components are placed and crimp closed (8) at a load based on functional requirement to arrest the ball joint from disassociation during vehicle operation. A boot (9) is mounted on the socket housing (1) encapsulating ball pin (3) head and preventing entry of contaminants.

Cumulative effects of low quality inspection, maintenance and service of ball joints on a vehicle lead to the ball socket separation. Accelerated corrosion of the ball pin (3) and the socket housing (1) contributed by failure of boot seal causes entry of water, mud and grit contaminating the grease which leads to metal to metal contact resulting in undesired frictional increase. Subsequently, prolonged usage under such undefined conditions has a negative impact on significant dimensions namely reduction in the ball head diameter and expansion of the socket housing (1) back opening diameter which leads to excess free play in the ball joint and eventually resulting in ball socket separation.

Some of the prior arts are:
EP0884489 discloses a vehicle ball joint with ball having radially extending flange and retention throat that is formed by an additional ring that fits into the seat bore. The ring which is essential for providing improved separation force is a two-part ring held in place in the bore by a cap. However, construction requires additional critical parts for intended functionality and hence is complex.
US6758622 discloses a ball joint that is employed in automotive lamp and reflector assemblies, said ball joint includes a socket body having a socket cup with an undercut portion defining a chamber that is designed to hold the head of mounting screw such that ball studs can be selectively inserted and removed from the corresponding socket as desired and thus provide accidental pull-out of the ball stud. However, construction cannot withstand pull-out forces in the range of 9kN that are pre-requisite for vehicle steering linkage ball joints.
US7695211 discloses a vehicular steering ball joint which houses an external retainer to improve accidental separation force accompanied by wear indicator to generate a signal in response to amount wear in ball joint. However, construction is complex due to more number of parts, reducing articulation angle which is essential and increasing product dimensions.

While numerous approaches for making ball joints are known in the art, there exists a need to eliminate the failure mode of ball socket separation or reduce the effects related to failure mode prior to ball socket separation i.e. prolonged indication of performance degradation to the user before approaching threshold limit of ball socket separation.

### OBJECTS OF INVENTION

One or more of the problems of the conventional prior art may be overcome by various embodiments of the present invention.

It is the primary object of the present invention to improve ball socket separation force in the steering ball joint mechanism subsequently improving vehicle safety.

It is another object of the present invention to improve the ball socket separation force in the steering ball joint mechanism to an extent where drastic change in steering linkage geometry can be identified by the user before the ball socket separation.

Another object of the present invention is to provide steering ball joint mechanism with an integral retainer seat on a ball stud to improve ball socket separation force thereby subsequently improving vehicle safety.

Yet another object of the present invention is to provide steering ball joint mechanism with retainer seat positioned in between ball pin and top of bearing cup to improve ball socket separation force thereby subsequently improving vehicle safety.

It is another object of the present invention wherein the simple construction and application of the retainer seat on a ball joint mechanism aides to retain defined steering linkage configuration even when undesirable excess wear has occurred which can be identified by the user before ball socket separation occurs.

### SUMMARY OF INVENTION

Thus according to the basic aspect of the present invention there is provided a steering ball joint mechanism that includes socket housing with a stem; at least one ball pin with a spherical head encapsulated in top metallic bearing cup and the socket housing; at least one end cap with or without grease nipple provision; an elastic device positioned between the top metallic bearing cup and end cap, and a boot mounted on the socket housing encapsulating the ball pin, characterized in that said ball pin with spherical head is provided with integral retainer seat, and
wherein the ball pin with integral retainer seat is positioned in the socket housing, wherein the bearing cup is positioned in between the ball pin with integral retainer seat and socket housing,
wherein the end cap is positioned above the bearing cup,
wherein the end cap positioned between the elastic device and socket housing is crimp closed to avoid disassociation of parts during operation, and
wherein the steering ball joint mechanism with integral retainer seat improves ball socket separation force.

It is another aspect of the present invention, wherein the retainer seat is integrated on top of the ball pin with spherical head.

It is another aspect of the present invention, wherein said ball pin (3) with spherical head (4) and integral retainer seat (10) forms a single entity.

Another aspect of present invention is directed to provide a steering ball joint mechanism that includes socket housing with a stem; at least one ball pin with a spherical head encapsulated in top metallic bearing cup and the socket housing; at least one end cap with or without grease nipple provision; an elastic device positioned between the top metallic bearing cup and end cap, and a boot mounted on the socket housing encapsulating the ball pin, characterized in that said steering ball joint mechanism comprising of at least one retainer seat, said retainer seat is positioned in between the ball pin with spherical head and top of the bearing cup,
wherein the bearing cup is positioned in between the ball pin with spherical head and the socket housing,
wherein the end cap is positioned above the bearing cup,
wherein the end cap positioned between the elastic device and socket housing is crimp closed to avoid disassociation of parts during operation, and
wherein the steering ball joint mechanism with retainer seat positioned in between the ball pin with spherical head and top of the bearing cup improves ball socket separation force.
It is another aspect of the present invention, wherein the retainer seat is attached to the ball pin with spherical head.
It is another aspect of the present invention, wherein said ball pin with spherical head is housed within the retainer seat.

### BRIEF DESCRIPTION OF THE ACCOMPANYING DRAWINGS:

Figure 1: illustrates the conventional steering linkage ball joint.
Figure 2: illustrates the steering linkage ball joint with integral retainer seat according to one embodiment the present invention.
Figure 3: illustrates the steering linkage ball joint with integral retainer seat according to another embodiment the present invention.

### DETAILED DESCRIPTION OF THE INVENTION WITH REFERENCE TO THE ACCOMPANYING DRAWINGS

The present invention as discussed hereinbefore relates to a steering metallic ball joint mechanism which eliminates undesirable ball socket separation resulting in complete loss of vehicle control. Further, to improve the ball socket separation force in the steering ball joint mechanism subsequently improving vehicle safety. Referring to Figure 2, in one embodiment, the steering ball joint mechanism includes socket housing (1) with a stem (2); at least one ball pin (3) with a spherical head (4) encapsulated in top metallic bearing cup (6) and the socket housing (1); at least one end cap (7) with or without grease nipple provision; an elastic device (5) positioned between the top metallic bearing cup (6) and end cap (7), and a boot (9) mounted on the socket housing (1) encapsulating the ball pin (3) prevent entry of contaminants, characterized in that said ball pin (3) with spherical head (4) is provided with integral retainer seat (10). The retainer seat (10) is integrated on top of the ball pin (3). The ball pin (3) with integral retainer seat (10) is positioned in the socket housing (1). The ball pin (3) with integral retainer seat (10) is achieved through machining or other known process. The ball pin (3) with spherical head (4) is housed within the integral retainer seat (10), in particular outer diameter of the retainer seat (10) is 10% minimum greater than spherical head (4). The ball pin (3) with spherical head (4) and integral retainer seat (10) forms a single entity.

The bearing cup (6) is positioned in between the ball pin (3) with integral retainer seat (10) and the socket housing (1). The end cap (7) is positioned above the bearing cup (6), said end cap (7) positioned between the elastic device (5) and socket housing (1). The socket housing (1) is crimp closed (8) onto the end cap (7) in order to secure the components from disassociation and is crimp closed (8) to avoid disassociation of parts during operation. In one aspect, the elastic device (5) may be polyurethane spacer for contemplating free-play developed during service life of a ball joint.

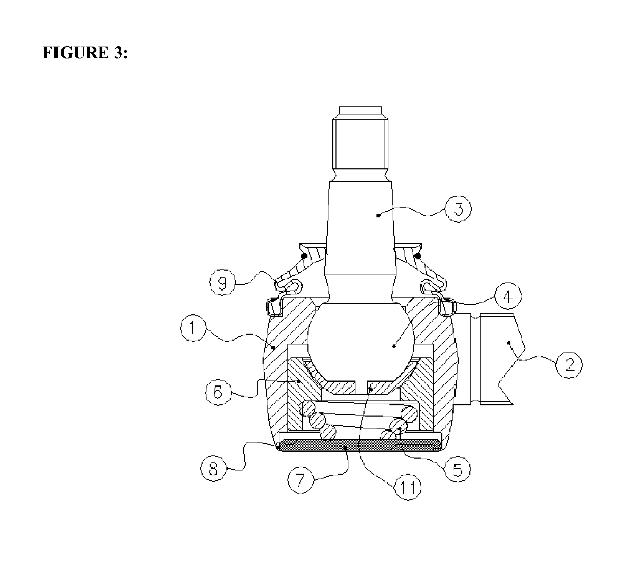

Referring to Figure 3, in another embodiment, the steering ball joint mechanism includes socket housing (1) with a stem (2); at least one ball pin (3) with a spherical head (4) encapsulated in top metallic bearing cup (6) and the socket housing (1); at least one end cap (7) with or without grease nipple provision; an elastic device (5) positioned between the top metallic bearing cup (6) and end cap (7), and a boot (9) mounted on the socket housing (1) encapsulating the ball pin (3) prevent entry of contaminants, characterized in that said steering ball joint mechanism comprising of at least one retainer seat (11), said retainer seat (11) is positioned in between the ball pin (3) with spherical head (4) and top of the bearing cup (6).

The retainer seat (11) is attached to the ball pin (3) by any of the available conventional methods. The end cap (7) is positioned above the bearing cup (6), said end cap (7) positioned between the elastic device (5) and socket housing (1). The socket housing (1) is crimp closed (8) onto the end cap (7) in order to secure the components from disassociation and is crimp closed (8) to avoid disassociation of parts during operation. In one aspect, the elastic device (5) may be polyurethane spacer for contemplating free-play developed during service life of a ball joint. The ball pin (3) with spherical head (4) is housed within the retainer seat (11), in particular outer diameter of the retainer seat (11) is 10% minimum greater than spherical head (4).

The steering ball joint mechanism with the integral retainer seat (10) and retainer seat (11) as shown in Figures 2 and 3 retain its defined steering linkage configuration under normal operating conditions thereby improving vehicle safety of its occupants and surrounding elements and also improves ball socket separation force than conventional steering linkage ball joint. Thus according to one or more embodiments of the present invention, the arrangement of the retainer seat (10) and (11) as shown in Figures 2 and 3 provides improved ball socket separation force to an extent 40% more than that of conventional ball joint.

The test result showing the technical effects of the present invention is annexed hereto as Annexure-A showing summary of pull out force test conducted with ball pin with riveted type retainer seat and confirmation on the efficacy of the improvement. Annexure-B illustrates test result showing summary of pull out strength test of conventional steering ball joint assembly. The efficacy of improvement from the invention as illustrated in Annexure-A is an illustrative example of the invention. The values and unit of measurement of force and strength mentioned in the Complete Specification are only illustrative examples for understanding the invention. Therefore, the above should not be construed as limiting the invention, which is defined by the appended objects.

## Claims

1. A steering ball joint mechanism includes socket housing (1) with a stem (2); at least one ball pin (3) with a spherical head (4) encapsulated in top metallic bearing cup (6) and the socket housing (1); at least one end cap (7) with or without grease nipple provision; an elastic device (5) positioned between the top metallic bearing cup (6) and end cap (7), and a boot (9) mounted on the socket housing (1) encapsulating the ball pin (3), **characterized in that** said ball pin (3) with spherical head (4) is provided with integral retainer seat (10), and
wherein the ball pin (3) with integral retainer seat (10) is positioned in the socket housing (1),
wherein the bearing cup (6) is positioned in between the ball pin (3) with integral retainer seat (10) and socket housing (1),
wherein the end cap (7) is positioned above the bearing cup (6),
wherein the end cap (7) positioned between the elastic device (5) and socket housing (1) is crimp closed (8) to avoid disassociation of parts during operation, and
wherein the steering ball joint mechanism with integral retainer seat (10) improves ball socket separation force.

2. The steering ball joint mechanism according to claim 1, wherein the retainer seat (10) is integrated on top of the ball pin (3) with spherical head (4).

3. The steering ball joint mechanism according to claim 2, wherein said ball pin (3) with spherical head (4) and integral retainer seat (10) forms a single entity.

4. A steering ball joint mechanism includes socket housing (1) with a stem (2); at least one ball pin (3) with a spherical head (4) encapsulated in top metallic bearing cup (6) and the socket housing (1); at least one end cap (7) with or without grease nipple provision; an elastic device (5) positioned between the top metallic bearing cup (6) and end cap (7), and a boot (9) mounted on the socket housing (1) encapsulating the ball pin (3), **characterized in that** said steering ball joint mechanism comprising of at least one retainer seat (11), said retainer seat (11) is positioned in between the ball pin (3) with spherical head (4) and top of the bearing cup (6),
wherein the bearing cup (6) is positioned in between the ball pin (3) with spherical head (4) and the socket housing (1),
wherein the end cap (7) is positioned above the bearing cup (6),
wherein the end cap (7) positioned between the elastic device (5) and socket housing (1) is crimp closed (8) to avoid disassociation of parts during operation, and
wherein the steering ball joint mechanism with retainer seat (11) positioned in between the ball pin (3) with spherical head (4) and top of the bearing cup (6) improves ball socket separation force.

5. The steering ball joint mechanism according to claim 4, wherein the retainer seat (11) is attached to the ball pin (3) with spherical head (4).

6. The steering ball joint mechanism according to claim 4, wherein said ball pin (3) with spherical head (4) is housed within the retainer seat (11).
